# DEMANDE DE BREVET EUROPEEN

(11) **EP 1 022 310 A1**
(43) Date de publication de la demande: **26.07.2000**
(21) Numéro de dépôt: 00400014.7
(22) Date de dépôt: 05.01.2000
(51) Int. Cl.: C08L 29/04, B32B 27/30, B65D 1/00

(54) **Composition à base d'un copolymère de l'éthylène et de l'alcool vinylique et son utilisation**

(30) Priorité: 19.01.1999 FR 9900490
(71) Demandeur: ELF ATOCHEM S.A., 92800 Puteaux, Hauts-de-Seine (FR)
(72) Inventeur: Bertin, Denis, 76970 Motteville (FR); Germain, Yves, 27470 Serquigny (FR)
(74) Mandataire: Neel, Henry

(57) **Abrégé**

L'invention concerne une composition à base d'un copolymère de l'éthylène et de l'alcool vinylique comprenant :
- 50 à 98 % en poids d'un copolymère EVOH
- 1 à 50 % en poids d'un polyéthylène (A)
- 1 à 15 % en poids d'un polyéthylène (B) constitué d'un mélange d'un polyéthylène (B1) et d'un polyéthylène (B2) choisi parmi les élastomères, les polyéthylènes de très basse densité et les polyéthylènes métallocènes, le mélange de (B1) et (B2) étant cogreffé par un acide carboxylique insaturé ou un dérivé fonctionnel de cet acide.

Elle concerne aussi une structure multicouche comprenant une couche constituée de cette composition. Cette structure est utile pour faire des emballages.

## Description

La présente invention concerne une composition à base d'un copolymère de l'éthylène et de l'alcool vinylique (EVOH) et son utilisation.

Les copolymères EVOH sont barrière à de nombreux gaz et en particulier à l'oxygène. De nombreux emballages alimentaires comprennent une couche constituée d'un film EVOH.

La présente invention concerne plus particulièrement des compositions comprenant (le total étant 100 %) :
- 50 à 98 % en poids d'un copolymère EVOH
- 1 à 50 % en poids d'un polyéthylène (A)
- 1 à 15 % en poids d'un polyéthylène (B) constitué d'un mélange d'un polyéthylène (B1) et d'un polyéthylène (B2) choisi parmi les élastomères, les polyéthylènes de très basse densité et les polyéthylènes métallocènes, le mélange de (B1) et (B2) étant cogreffé par un acide carboxylique insaturé ou un dérivé fonctionnel de cet acide.

Les copolymères EVOH en général ont diverses excellentes propriétés telles qu'une propriété d'imperméabilité à l'oxygène, une résistance mécanique, etc..., et trouvent, en tant que tels, une application dans de nombreuses utilisations comme films, feuilles, matériaux pour récipients, fibres textiles, etc. Cependant, ce copolymère donne naissance à une variation de l'épaisseur du produit dans le procédé de moulage pour la fabrication d'un film ou d'une feuille, avec une baisse consécutive de l'aptitude à la commercialisation du produit et, à cause du défaut d'étirabilité et de flexibilité, donne naissance à un tirage non uniforme au cours de l'emboutissage profond et d'autres procédés faisant intervenir une force d'étirement, ou des trous d'aiguille au cours de l'utilisation du produit, imposant ainsi de sérieuses limitations à son application comme matière première d'emballage. La barrière à l'oxygène des copolymères EVOH est fortement diminuée quand l'humidité relative (RH) augmente.

Pour surmonter ces inconvénients, on a tenté de stratifier une matière en résine imperméable, comme un film de polyoléfine, sur une feuille de copolymère EVOH ou d'améliorer l'étirabilité et la flexibilité du moulage en incorporant une polyoléfine dans le copolymère EVOH.

La demande JP 05098084 publiée le 20 avril 1993 décrit des mélanges de 5 à 80 parties de polyéthylène, 10 à 90 parties d'EVOH et 10 à 90 parties de polyéthylène greffé par un acide carboxylique insaturé nécessaire pour compatibiliser le polyéthylène et l'EVOH.

La demanderesse a trouvé que ces compositions ne présentaient une barrière à l'oxygène que si l'EVOH était majoritaire dans le mélange et que c'était aussi fonction du compatibilisant. Cependant la compatibilisation de l'EVOH et du polyéthylène par le polyéthylène greffé décrit n'est pas très bonne, le mélange n'est pas reproductible, il est difficile de le mettre en film.

Le brevet US 5322877 décrit des compositions semblables aux précédentes mais comprenant en plus un sel de métal alcalin d'un acide gras. La quantité d'EVOH est de 30 à 70 % de l'ensemble constitué de l'EVOH, du polyéthylène et du polyéthylène greffé.

Les compositions de la présente invention sont barrière à l'oxygène et facilement transformables. D'autres avantages seront décrits au cours du texte.

L'invention va maintenant être décrite en détails.

Le copolymère EVOH et aussi appelé copolymère éthylène-acétate de vinyle saponifié. Le copolymère éthylène-acétate de vinyle saponifié à employer selon la présente invention est un copolymère ayant une teneur en éthylène de 20 à 60 % en moles, de préférence de 25 à 55 % en moles, le degré de saponification de son composant acétate de vinyle n'étant pas inférieur à 95 % en moles.

Avec une teneur en éthylène inférieure à 20 % en moles, la propriété d'imperméabilité à l'oxygène dans des conditions de forte humidité n'est pas aussi élevée qu'on le souhaiterait, tandis qu'une teneur en éthylène dépassant 60 % en moles conduit à des baisses de la propriété d'imperméabilité à l'oxygène, de l'aptitude à l'impression et d'autres propriétés physiques. Lorsque le degré de saponification ou d'hydrolyse est inférieur à 95 % en moles, la propriété d'imperméabilité à l'oxygène et la résistance à l'humidité sont sacrifiées. Parmi ces copolymères saponifiés, ceux qui ont des indices de fluidité à chaud dans l'intervalle de 0,5 à 100 g/10 minutes sont particulièrement utiles.

Il est entendu que ce copolymère saponifié peut contenir de faibles proportions d'autres ingrédients comonomères, y compris des α-oléfines comme le propylène, l'isobutène, l'α-octène, l'α-dodécène, l'α-octadécène, etc..., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

La perméabilité à l'oxygène des films de copolymères EVOH mesurée selon ASTM D 3985 s'exprime en cm³ d'oxygène par m² pour 24 heures pour une différence de pression de 1 bar et une épaisseur de 25 µm. Par simplification on la désigne par O₂GTR dans la suite du texte.

O₂GTR varie proportionnellement avec l'inverse de l'épaisseur du film.

Un EVOH comprenant 38 % en mole de motifs éthylène à une O₂GTR de 0,72 pour 0 % RH et 3,1 pour 75 % RH.

Un EVOH comprenant 29 % en mole de motifs éthylène a une O₂GTR de 0,1 pour 0 % RH et 1,41 pour 75 % RH. Ces qualités sont produites industriellement et sont disponibles dans le commerce.

On utilise l'une ou l'autre de ces qualités en différentes épaisseurs selon la barrière demandée (nature du produit à conserver, durée de conservation...). La demanderesse a découvert que les compositions de l'invention à base d'un copolymère EVOH à 29 % molaire d'éthylène avaient en film les mêmes propriétés barrière qu'un film constitué essentiellement d'un copolymère EVOH à 38 % molaire d'éthylène mais étaient très facilement transformables. En effet le copolymère EVOH, bien qu'il soit thermoplastique, est très rigide. Son module de flexion est de l'ordre de 2000 MPa. Les compositions de l'invention ont un module de flexion de l'ordre de 1500 dès que la proportion du polyéthylène (A) est d'au moins 15 % en poids.

L'invention est particulièrement adaptée aux copolymères EVOH ayant des teneurs an éthylène allant de 25 à 45 % molaire et des MFI (Melt Flow Index ou indice d'écoulement à l'état fondu selon ASTM D 1238) allant de 1,5 à 4 (g/10 mn à 190°C sous 2,16 kg) et de 5 à 30 (g/10 mn à 230°C sous 2,16 kg).

S'agissant du polyéthylène (A), il est choisi parmi les polyéthylènes homo- ou copolymères.

A titre de comonomères, on peut citer
- les alpha-oléfines, avantageusement celles ayant de 3 à 30 atomes de carbone.
   Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1―eicocène, 1-dococène, 1-tétracocène, 1-hexacocène, 1―octacocène, et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone.

Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les époxydes insaturés.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.
- les acides carboxyliques insaturés, leurs sels, leurs anhydrides.

Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.
- (A) peut comprendre plusieurs comonomères.

Avantageusement le polymère (A), qui peut être un mélange de plusieurs polymères, comprend au moins 50% et de préférence 75% (en moles) d'éthylène. La densité de (A) peut être comprise entre 0,86 et 0,98 g/cm³. Le MFI (indice de viscosité à 190°C, 2,16 kg) est compris avantageusement entre 1 et 1000 g/10 min.

A titre d'exemple de polymères (A) on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%
- les copolymères éthylène (méth)acrylate d'alkyle-anhydride maléique obtenus par copolymérisation des trois monomères, les proportions de (méth)acrylate étant comme les copolymères ci-dessus, la quantité d'anhydride maléique étant jusqu'à 10% et de préférence 0,2 à 6% en poids.
- les copolymères éthylène-acétate de vinyle-anhydride maléique obtenus par copolymérisation des trois monomères, les proportions étant les mêmes que dans le copolymère précédent.

Avantageusement (A) est choisi parmi les LLDPE de densité inférieure à 0,920 et les métallocènes de densité 0,870 à 0,900 et de préférence les métallocènes. Le MFI de (A) est avantageusement compris entre 0,1 et 10 (190°C - 2,16 kg).

Quant au polyéthylène (B) il résulte du greffage d'un mélange de (B1) et (B2) qu'on greffe par un acide carboxylique insaturé ou un dérivé fonctionnel de cet acide.

(B1) peut être choisi parmi les polyéthylènes cités pour le polyéthylène (A) ci-dessus. De préférence (B1) est choisi parmi les LLDPE et les métallocènes.

A titre d'exemple d'élastomères (B2) on peut citer les copolymères éthylène/propylène (EPR), éthylène/propylène/diène, éthylène/1-butène, éthylène/ 1-butène/diène, éthylène/propylène/1-butène/diène, éthylène/ 4-méthyl-1-pentène, et des mélanges d'au moins deux de ces élastomères.

A titre d'exemple d'élastomères on peut encore citer les copolymères à blocs styrène/butadiène/styrène (SBS), à blocs styrène/éthylène-butène/styrène (SEBS) ou encore à blocs styrène/isoprène/styrène (SIS).

(B2) peut être aussi un polyéthylène VLDPE (très basse densité). Ce sont des copolymères d'éthylène et d'une alphaoléfine de densité pouvant être comprise entre 0,860 et 0,910.

(B2) peut être aussi un polyéthylène métallocène.

La densité de (B2) est avantageusement comprise entre 860 et 880.

C'est-à-dire que (B2) représente une gamme de polymères allant des résines thermoplastiques aux élastomères. De préférence (B2) est un élastomère, les copolymères éthylène/propylène, les copolymères éthylène/1-butène et les copolymères éthylène-octène sont ceux que l'on préfère le plus. De préférence, le copolymère éthylène/propylène et le copolymère éthylène/1-butène ont un indice d'écoulement en masse fondue (mesuré à 190°C selon ASTM D1238-65T) de 0,1 à 20, et une teneur en éthylène de 60 à 90% en mole.

On utilise avantageusement 60 à 90 parties de (B1) pour 40 à 10 parties de (B2).

Le mélange de (B1) et (B2) est greffé avec un acide carboxylique insaturé, c'est-à-dire (B1) et (B2) sont cogreffés. On ne sortirait pas du cadre de l'invention en utilisant un dérivé fonctionnel de cet acide c'est-à-dire (B1) et (B2) sont cogreffés.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle. méthacrylate d'éthyle, acrylate de butyle, méthacrylate de butyle, acrylate de glycidyle, méthacrylate de glycidyle, maléate de monoéthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère l'anhydride maléique.

Divers procédés connus peuvent être utilisés pour greffer un monomère de greffage sur le mélange de (B1) et (B2).

Par exemple, ceci peut être réalisé en chauffant les polymères (B1) et (B2) à température élevée, environ 150° à environ 300°C, en présence ou en l'absence d'un solvant avec ou sans initiateur de radicaux. Des solvants appropriés qui peuvent être utilisés dans cette réaction sont le benzène, toluène, xylène, chlorobenzène, cumène, etc. Des initiateurs de radicaux appropriés qui peuvent être utilisés comprennent le t(butyl-hydroperoxyde, cumène-hydroperoxyde, di-iso-propyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

Dans le mélange de (B1) et (B2) modifié par greffage obtenu de la façon susmentionnée, la quantité du monomère de greffage peut être choisie d'une façon appropriée mais elle est de préférence de 0,01 à 10%, mieux de 600 ppm à 6 %, par rapport au poids de (B1) et (B2) greffés.

La quantité du monomère greffé est déterminée par dosage des fonctions succiniques par spectroscopie IRTF.

Le MFI de (B) c'est-à-dire de (B1) et (B2) ayant été cogreffés est 0,1 à 3.

Selon une forme particulière de l'invention le polymère (B), c'est-à-dire (B1) et (B2) cogreffés, est tel que
(B1) comprend au moins 75% en mole d'éthylène et a un rapport MFI₂/[η]^{-8,77} en valeur absolue supérieur à 15,
(B2) comprend au moins 50 % en mole d'éthylène
(B2) a un rapport MFI₂/[η]^{-8,77} en valeur absolue supérieur à 15,
   sa teneur en éthylène n'est pas inférieure à 70 % en mole
   selon une autre forme préférée, le rapport MFI₁₀/MFI₂ est compris entre 5 et 20, où MFI₂ est l'indice d'écoulement en masse fondue à 190°C sous une charge de 2,16 kg, mesuré suivant ASTM D1238, MFI₁₀ est l'indice d'écoulement en masse fondue à 190°C sous une charge de 10 kg suivant ASTM D1238. La viscosité intrinsèque [η] désigne l'indice de viscosité dl/g d'un polymère mesuré dans une solution de décaline à 135°C.

Des compositions particulièrement avantageuses comprennent (le total étant 100 %) :
55 à 98 % de copolymère EVOH
1 à 44 % de polyéthylène (A)
1 à 10 % de polyéthylène (B)
de préférence
55 à 75 % de copolymère EVOH
15 à 25 % de polyéthylènes (A)
5 à 15 % de polyéthylène (B).

Les compositions de l'invention peuvent être préparées par mélange à l'état fondu dans des extrudeuses (mono ou bi vis), des malaxeurs BUSS,des mélangeurs BRABENDER et en général les dispositifs habituels de mélange des thermoplastiques.

Les compositions de l'invention sont particulièrement aptes à la transformation par les techniques usuelles des thermoplastiques. Elles peuvent êtres mises en film par exemple en cast ou en extrusion souffage.

Les compositions de l'invention sont utiles comme couche barrière dans des emballages multicouches. Ils comprennent par exemple une couche de polyoléfine, un liant, une couche des compositions de l'invention, une couche de liant, une couche de polyoléfine.

Ils peuvent se présenter sous la forme d'emballages souples ou de bouteilles ou de réservoirs.

Ces emballages sont fabriqués par coextrusion ou par injection soufflage.

### Exemples

On a utiisé les matières suivantes :
- EVOH E: copolymère éthylène - alcool vinylique à 38 % molaire d'éthylène MFI 8 (210°C - 2,16 kg), température de fusion 183°C, température de cristallisation 160°C, Tg (température de transition vitreuse) 61°C.
- EVOH D: copolymère éthylène alcool vinylique à 29 % molaire d'éthylène, MFI 8 (210°C - 2,16 kg), température de fusion 188°C, température de cristallisation 163°C, Tg (température de transition vitreuse) 62°C.
- ENGAGE 8200: polyéthylène métallocène MFI 5 (190°C - 2,16 kg) densité 0,870
- ENGAGE 8150: polyéthylène métallocène MFI 0,5 densité 0,870
- CLEARPLEX FFDO: LLDPE MFI 0,8 (190°C - 2,16 kg) densité 0,900.
- OREVAC A: Mélange de 75 parties de (B1) et (B2) cogreffés par l'anhydride maléique.
(B1) est un LLDPE à 8 % molaire d'octène de MFI 4,4 (190°C - 2,16 kg) et densité 0,920 et MFI₂/(η)-^{8,77} = 43,9.
(B2) est un copolymère éthylène propylène à 15,4 % de propylène, de MFI 0,2 (190°C - 2,16 kg) et MFI₂/(η)-^{8,77} = 871,5.

On a préparé par extrusion cast des films de 25 µm. La perméabilité à l'oxygène a été mesurée par un appareil OXTRAN 2/20.

Les résultats sont reportés sur le tableau 1 (parties en poids).

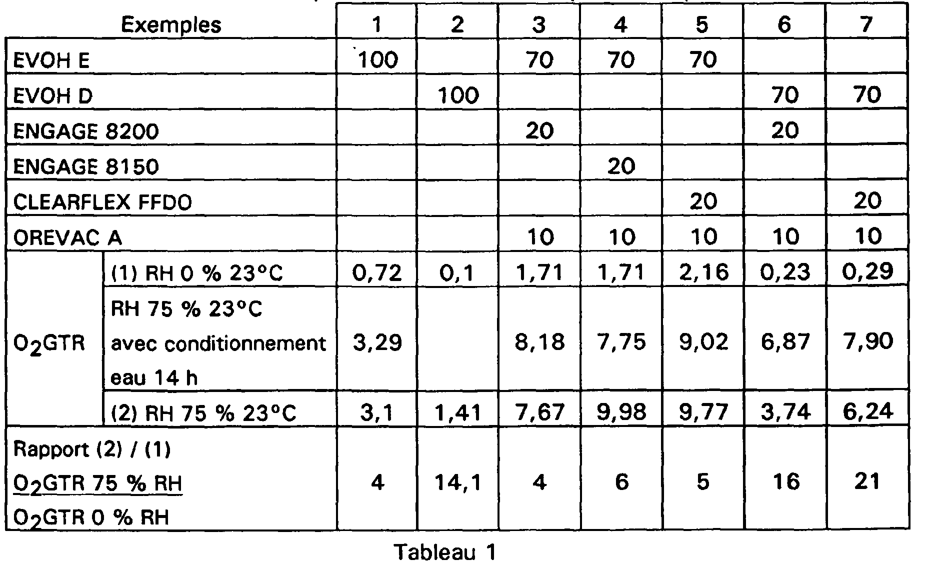

## Revendications

1. Composition à base d'un copolymère de l'éthylène et de l'alcool vinylique comprenant :
- 50 à 98 % en poids d'un copolymère EVOH
- 1 à 50 % en poids d'un polyéthylène (A)
- 1 à 15 % en poids d'un polyéthylène (B) constitué d'un mélange d'un polyéthylène (B1) et d'un polyéthylène (B2) choisi parmi les élastomères, les polyéthylènes de très basse densité et les polyéthylènes métallocènes, le mélange de (B1) et (B2) étant cogreffé par un acide carboxylique insaturé ou un dérivé fonctionnel de cet acide.

2. Composition selon la revendication 1 dans laquelle le polyéthylène (A) est un LLDPE ou un métallocène.

3. Composition selon la revendication 1 ou 2 dans laquelle (B1) est choisi parmi les LLDPE et les métallocènes.

4. Composition selon l'une quelconque des revendications précédentes dans laquelle (B) c'est-à-dire (B1) + (B2) cogreffés est tel que
(B1) comprend au moins 75 % en mole d'éthylène et a un rapport MFI₂/(η)-^{8,77} en valeur absolue supérieur à 15,
(B2) comprend au moins 50 % en mole d'éthylène,
(B2) a un rapport MFI₂/(η)-^{8,77} en valeur absolue supérieur à 15, sa teneur en éthylène n'est pas inférieure à 70 % en mole. La viscosité intrinsèque (η) désigne l'indice de viscosité dl/g d'un polymère mesuré dans une solution de décaline à 135°C.

5. Composition selon la revendication 4 dans laquelle (B) est tel que le rapport MFI₁₀/MFI₂ est compris entre 5 et 20, où MFI₂ est l'indice d'écoulement en masse fondue à 190°C sous une charge de 2,16 kg, mesuré suivant ASTM D1238, MFI₁₀ est l'indice d'écoulement en masse fondue à 190°C sous une charge de 10 kg suivant ASTM D1238.

6. Structure multicouches comprenant une couche constituée de la composition selon l'une des revendications 1 à 5.

7. Emballages, bouteilles ou réservoirs comprenant la structure multicouches de la revendication 6.
